# EUROPÄISCHE PATENTSCHRIFT

(11) **EP 1 293 378 B1**
(45) Veröffentlichungstag und Bekanntmachung des Hinweises auf die Patenterteilung: **15.08.2007**
(21) Anmeldenummer: 02019958.4
(22) Anmeldetag: 05.09.2002
(51) Int. Cl.: B60N 2/04, B60N 2/16

(54) **Sitzeinrichtung in einem minengeschützten Kampffahrzeug**
Seat assembly in a mine protected combat vehicle
Ensemble de siège dans un véhicule de combat qui est protégé contre les mines

(30) Priorität: 14.09.2001 DE 10145315
(43) Veröffentlichungstag der Anmeldung: 19.03.2003
(73) Patentinhaber: Krauss-Maffei Wegmann GmbH & Co. KG, 80997 München (DE)
(72) Erfinder: Mauthe, Thomas, 86899 Landsberg (DE); Heise, Gerhard, 80997 München (DE); Egger, Adolf, 85221 Dachau (DE); Hesse, Hans, 81245 München (DE)
(74) Vertreter: Feder, Wolf-Dietrich

(56) Entgegenhaltungen:
- DE-A- 3 011 805
- DE-A- 19 717 782
- JP-A- 11 115 582
- US-A- 3 606 452
- US-A- 3 986 748

## Beschreibung

Die Erfindung betrifft eine Sitzeinrichtung in einem Kampffahrzeug mit den Merkmalen aus dem Oberbegriff des Patentanspruchs 1.

Eine derartige Sitzeinrichtung ist beispielsweise in DE 3011805 A1 beschrieben. In diesem Dokument ist ein Fahrzeugsitz, insbesondere für Panzerfahrzeuge offenbart, der ein Grundgestell aufweist, auf dem eine Sitzplatte angeordnet ist und an dem eine Rückenlehne schwenkbar befestigt ist. Das Grundgestell ist in einer vertikal ausgerichteten Profilschiene als Aufhängung geführt, die an einer Innenbordwand der Fahrzeugwanne befestigt ist. Den Minenschutz betreffende Maßnahmen sind nicht offenbart.

In US 3 606 452 A ist ein gepanzerter Sitz für ein gepanzertes Fahrzeug offenbart, dessen Grundgestell als verformungssteife, splitterschützende Blechkonstruktion mit einer Bodenwand und zwei Seitenwänden ausgebildet ist.

In DE 197 17 782 C2 ist eine Sitzeinrichtung in einem Kampffahrzeug beschrieben, bei der das unterhalb einer Luke in der Fahrzeugwanne angeordnete Grundgestell als im wesentlichen rechteckiger Sitzträgerrahmen ausgebildet ist, der horizontal und im wesentlichen in Fahrzeuglängsrichtung angeordnet und an seiner der Fahrzeuglängsmittelachse zugewandten hinteren Ecke über eine Halterung mit einer im Fahrzeug vertikal fest angeordneten Führungssäule gekoppelt ist, längs der er mittels einer Hubvorrichtung im durch ein Besatzungsmitglied belasteten Zustand aus einer unteren Position in eine erhöhte Position anhebbar und wieder in die untere Position absenkbar ist. Die Führungssäule ist mit ihrem unteren Ende am Boden der Fahrzeugwanne befestigt. Diese Befestigung der den Sitz tragenden Elemente am Boden der Fahrzeugwanne hat sich als schwerwiegender Nachteil bei Minenexplosionen erwiesen. Es hat sich gezeigt, dass auch bei mit einem besonderen Minenschutz an der Unterseite versehenen Kampffahrzeugen sich bei einer Minenexplosion der Boden der Fahrzeugwanne erheblich nach oben ausbeult und alle mit dem Boden fest verbundenen Bauteile an der auftretenden Stoßbelastung teilnehmen, so dass ein sehr hoher Impuls auf den Fahrzeugsitz und damit die auf dem Fahrzeugsitz sitzende Person weitergeleitet wird, was zu erheblichen Verletzungen führen kann.

Der Erfindung liegt die Aufgabe zugrunde, eine Sitzeinrichtung in einem minengeschützten Kampffahrzeug zu schaffen, bei welcher die bei einer Minenexplosion auf den Boden der Fahrzeugwanne einwirkende Stoßbelastung nicht auf den Sitz übertragen wird und bei der das die Sitzplatte tragende Grundgestell einerseits so verschoben werden kann, dass jeweils die richtige Sitzposition zu den Bedienungselementen und Sichtmitteln bei Fahrt unter Luke eingestellt werden kann und andererseits in den Bereich direkt unterhalb der Lukenöffnung angehoben werden kann.

Die Lösung erfolgt erfindungsgemäß mit den Merkmalen aus dem kennzeichnenden Teil des Patentanspruchs 1. Vorteilhafte Weiterbildungen der Erfindung sind in den abhängigen Ansprüchen beschrieben.

Ein Grundgedanke der Erfindung besteht darin, bei einem minengeschützten Kampffahrzeug das Grundgestell mittels einer Rohrkonstruktion aufzuhängen.

Bei der erfindungsgemäßen Sitzeinrichtung besitzt die Rohrkonstruktion mindestens zwei zueinander parallel und schräg aufwärts zur Bodenebene der Fahrzeugwanne verlaufende Führungsrohre, deren obere Enden im oberen Bereich der Vorder- oder Seitenwand der Fahrzeugwanne befestigt und deren untere Enden über Verbindungsrohre an der Dachplatte der Fahrzeugwanne aufgehängt sind, wobei das Grundgestell über Halterungen verschiebbar auf den Führungsrohren angeordnet ist und eine Antriebsvorrichtung zur Bewegung des Grundgestells auf- und abwärts in Richtung der Führungsrohre vorgesehen ist.

Durch die schräg nach oben laufenden Führungsrohre wird erreicht, daß diese Rohre gleichzeitig Aufhängung und Führung für das Grundgestell der Sitzeinrichtung sind und zur Sitzhöhenverstellung dienen. Dabei kann das die Sitzplatte tragende Grundgestell auf den Führungsrohren einerseits so verschoben werden, daß jeweils die richtige Sitzposition zu den Bedienungselementen und Sichtmitteln bei Fahrt unter Luke eingestellt werden kann und andererseits in den Bereich direkt unterhalb der Lukenöffnung angehoben werden kann, so daß in dieser erhöhten Stellung von der Sitzeinrichtung aus ein Beobachten aus der geöffneten Luke heraus möglich ist. Für den Gefahrenfall kann eine Schnellabsenkung vorgesehen sein, welche Grundgestell und Sitzplatte wieder in die unterste Position zurückführt.

Die erfindungsgemäße Sitzeinrichtung stellt eine einfache und kostengünstige Lösung dar, die nicht nur für den Neubau von minengeschützen Kampffahrzeugen, sondern auch für die Nachrüstung bestehender Kampffahrzeuge geeignet ist und insbesondere für die Ausrüstung von minengeschützen Fahrerständen im Kampffahrzeug gedacht ist.

Im folgenden werden anhand der beigefügten Zeichnungen Ausführungsbeispiele für eine Sitzeinrichtung nach der Erfindung in einem minengeschützen Kampffahrzeug näher erläutert.

In den Zeichnungen zeigen:
Fig. 1 in schematischer Darstellung in einer teilweise aufgerissenen Seitenansicht ein minengeschütztes Kampffahrzeug mit einer angedeuteten Sitzeinrichtung;
Fig. 2 in einer perspektivischen Darstellung eine Ausführungsform der Sitzeinrichtung mit einem Spindelantrieb im Kampffahrzeug nach Fig. 1;
Fig. 3 in einer Darstellung analog Fig. 2 eine Variante der Ausführungsform nach Fig. 2;
Fig. 4 eine zweite Ausführungsform einer Sitzeinrichtung mit einem Kettenantrieb im Kampffahrzeug nach Fig. 1;
Fig. 5 in einer Darstellung analog Fig. 4 eine Variante der Ausführungsform nach Fig. 4 mit einer Sitzeinrichtung mit Seilzugantrieb im Kampffahrzeug nach Fig. 1;
Fig. 6 in einer Darstellung analog den Fig. 2 bis 5 eine dritte Ausführungsform einer Sitzeinrichtung mit Schraubenfederantrieb im Kampffahrzeug nach Fig. 1;
Fig. 7 in einer Darstellung analog Fig. 6 eine Variante der Ausführungsform nach Fig. 6 mit einer Sitzeinrichtung mit Gasfederantrieb im Kampffahrzeug nach Fig. 1.

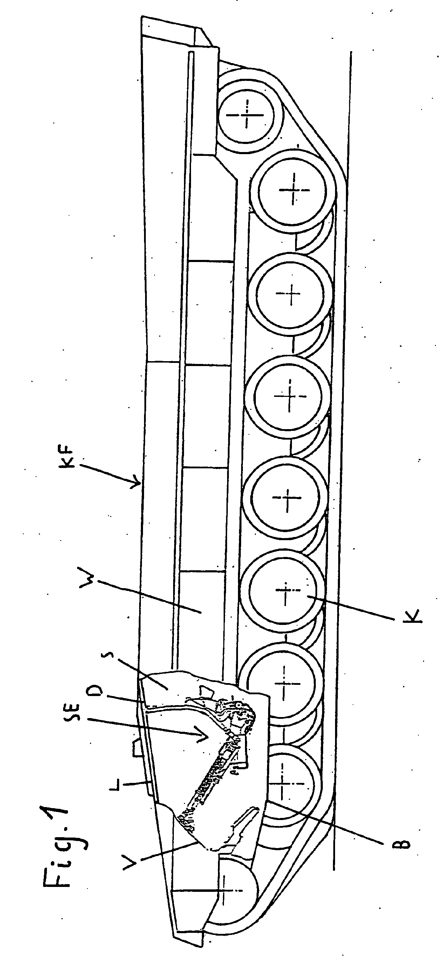

Fig. 1 zeigt ein allgemein mit KF bezeichnetes Kampffahrzeug, welches eine von einem Kettenfahrwerk K getragene Fahrzeugwanne W aufweist. Wie aus der Aufreißung am Vorderteil des Kampffahrzeugs KF zu erkennen, ist im Kampffahrzeug eine Sitzeinrichtung für den Fahrer des Fahrzeugs angeordnet, die in Fig. 1 allgemein mit SE bezeichnet ist. Wie weiterhin aus Fig. 1 zu erkennen, ist die Sitzeinrichtung SE unterhalb der Dachplatte D angeordnet, wobei die Dachplatte D mit einer durch einen Lukendeckel verschließbaren Luke L versehen ist. Weiterhin sind vom Innenraum im Bereich der Sitzeinrichtung SE eine Vorderwand V, eine Seitenwand S und eine Bodenplatte B zu erkennen.

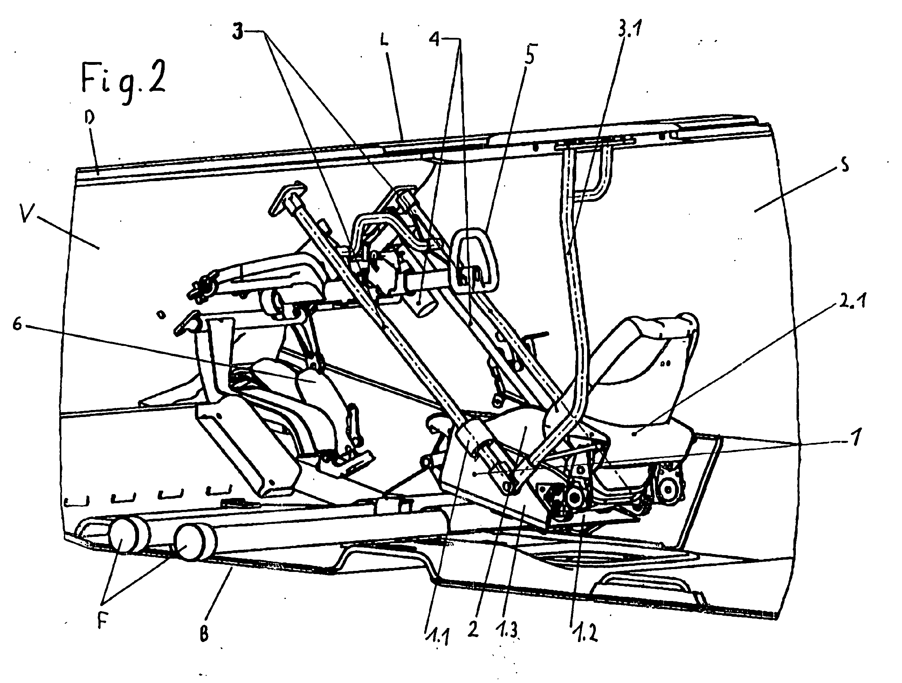

Ein erstes Ausführungsbeispiel der Sitzeinrichtung SE für den Fahrersitz wird im folgenden anhand von Fig. 2 beschrieben. Man erkennt in Fig. 2 einen Teil der Bodenplatte B der Fahrzeugwanne W sowie Teile einer Seitenwand S, einer Vorderwand V und einer Dachplatte D. Im Bereich der Bodenplatte B sind in üblicher Weise in Querrichtung zum Kampffahrzeug verlaufende Drehstabfedern F angeordnet.

Die Sitzeinrichtung besitzt ein Grundgestell 1, das als verformungssteife, splitterschützende Blechkonstruktion mit einer Bodenwand 1.2 und zwei geschlossenen Seitenwänden 1.3 ausgebildet ist. Das Grundgestell trägt eine Sitzplatte 2, an welcher in üblicher und bekannter Weise eine Rückenlehne 2.1 schwenkbar und ggf. abnehmbar befestigt ist. Dieses Grundgestell 1 ist nicht auf dem Boden B der Fahrzeugwanne abgestützt und befestigt, sondern es befindet sich in einem vorgegebenen Abstand zum Boden der Fahrzeugwanne, der außerhalb des sich bei einer Minenexplosion ausbeulenden Bereichs des Bodens B liegt. Das Grundgestell 1 ist über eine Rohrkonstruktion an der Vorderwand V und der Dachplatte D aufgehängt. Diese Rohrkonstruktion besitzt zwei zueinander parallel und schräg aufwärts zur Bodenebene der Fahrzeugwanne verlaufende Führungsrohre 3, deren obere Enden im oberen Bereich der Vorderwand V befestigt sind und deren untere Enden über Verbindungsrohre 3.1 an der Dachplatte D aufgehängt sind. Auf den Führungsrohren 3 ist das Grundgestell 1 über Halterungen 1.1 verschiebbar angeordnet. Weiterhin ist eine Antriebsvorrichtung zur Bewegung des Grundgestells 1 auf- und abwärts entlang der Führungsrohre 3 vorgesehen. Im Ausführungsbeispiel nach Fig. 2 ist diese Antriebsvorrichtung als Spindeltrieb 4 mit einer elektrisch angetriebenen Gewindespindel ausgebildet, die von einem Motor 4.1 angetrieben wird.

Durch die Entkoppelung zwischen der Sitzeinrichtung und dem Boden B der Fahrzeugwanne ist ein Höchstmaß an Sicherheit für den Fahrer gewährleistet. Andererseits ist es möglich, nicht nur eine Höhen- und Längsverstellung im Hinblick auf die in Fig. 2 dargestellten Bedienungselemente 5 und 6 des Fahrerstandes vorzusehen, sondern das Grundgestell 1 kann zusammen mit der Sitzplatte 2 und der Rükkenlehne 2.1 in eine angehobene Stellung hochgefahren werden, in welcher der Fahrer mit dem Kopf aus der Öffnung der Luke L herausgefahren ist und so eine direkte Sicht nach außen hat. Im Gefahrenfall kann er durch Betätigung einer Schnellabsenkung schnell in das Innere der Fahrzeugwanne zurückgeholt werden.

Im folgenden werden weitere Ausführungsformen der Sitzeinrichtung erläutert.

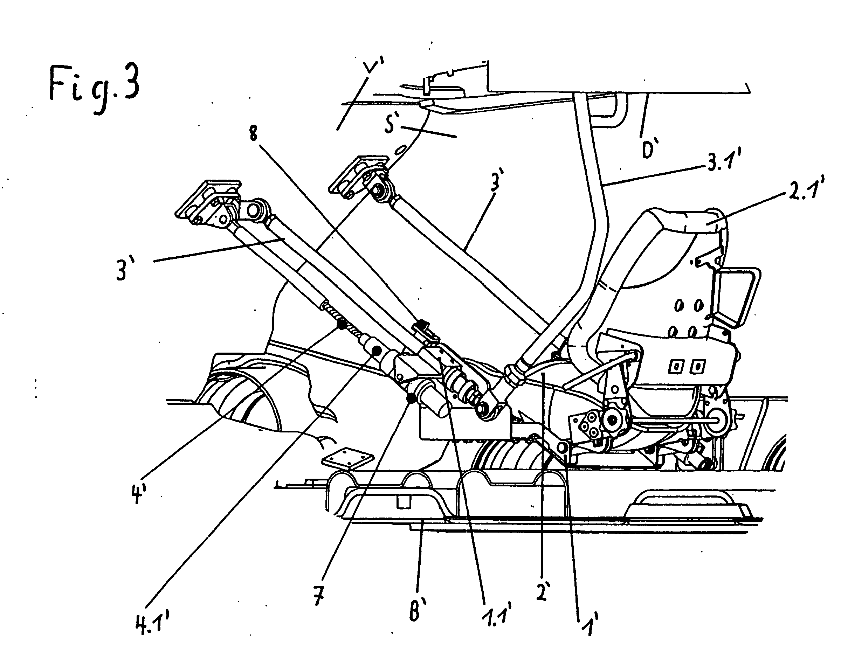

Fig. 3 zeigt eine Variante der Sitzeinrichtung nach Fig. 2, welche eine Antriebsvorrichtung aufweist, die ebenfalls als Spindeltrieb ausgebildet ist. In Fig. 3 sind die gleichen Bezugsziffern verwendet wie in Fig. 2 und jeweils mit einem Apostrophstrich versehen.

Die Sitzeinrichtung besitzt ein Grundgestell 1', welches die Sitzplatte 2' trägt, an welcher die Rückenlehne 2.1' angeordnet ist. Das Grundgestell 1' ist in der gleichen Weise wie bei der Ausführungsform nach Fig. 2 über schräg aufwärts zur Bodenplatte B' verlaufende Führungsrohre 3' an der Vorderwand V' aufgehängt, wobei die unteren Enden der Führungsrohre 3' über Verbindungsrohre 3.1' wiederum an der Dachplatte D' aufgehängt sind. Parallel zu den Führungsrohren 3' verläuft eine Gewindespindel 4', die von einem Elektromotor 4.1' angetrieben ist, an welchem die Halterung 1.1' des Grundgestells 1' befestigt ist. Durch eine Kupplung 7 kann zur Schnellabsenkung des Grundgestells 1' in der oberen Position das Grundgestell 1' vom Spindelantrieb 4' - 4.1' abgekoppelt werden. Der Elektromotor 4.1 und die Kupplung 7 für die Schnellabsenkung können von der auf dem Sitz 2' sitzenden Person über Schalter 8 betätigt werden, so daß das Fahrer aus der erhöhten Position im Gefahrenfall schnell in das Innere der Fahrzeugwanne zurückgeholt werden kann.

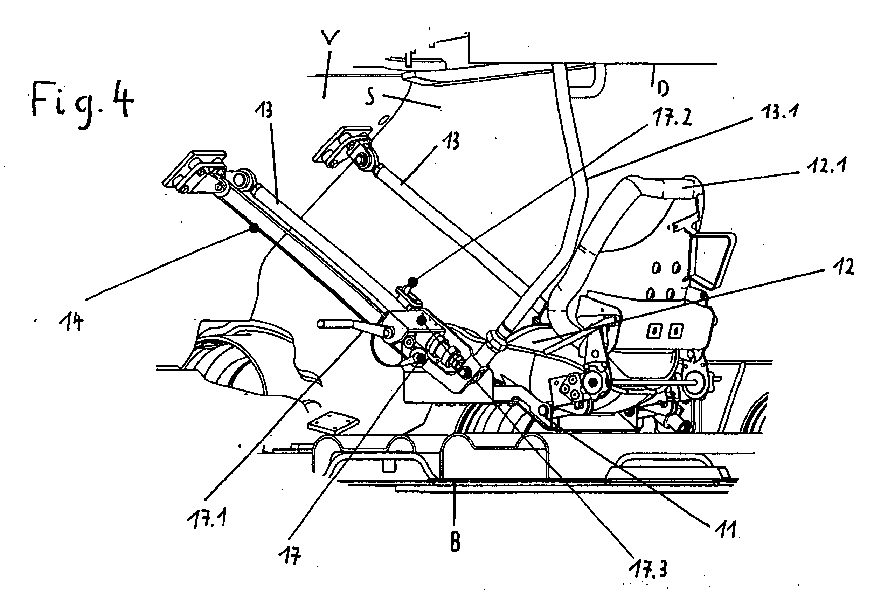

Die in Fig. 4 dargestellte Sitzeinrichtung entspricht in ihrem grundsätzlichen Aufbau der Sitzeinrichtung nach den Fig. 2 und 3 und besitzt lediglich eine unterschiedliche Antriebsvorrichtung. Auch hier trägt das Grundgestell 11 eine Sitzplatte 12 mit Rückenlehne 12.1 und ist über Halterungen 11.1 an der Rohrkonstruktion aus den beiden Führungsrohren 13 geführt, welche mit ihren oberen Enden an der Vorderwand V befestigt sind und deren untere Enden über Verbindungsrohre 13.1 an der Dachplatte D aufgehängt sind. Die Antriebsvorrichtung für das Grundgestell 11 besitzt eine Antriebskette 14, an welcher das Grundgestell 11 befestigt ist, und eine Antriebskurbel 17.1, mittels der die Antriebskette 14 in Umlauf gesetzt werden kann. Weiterhin ist auch bei dieser Ausführungsform zwischen der Antriebsvorrichtung und dem Grundgestell 11eine Freischaltkupplung 17 zur Schnellabsenkung des Grundgestells 1 1 angeordnet, die über eine Betätigungseinrichtung 17.2 ausgelöst werden kann. Zur Arretierung des Grundgestells 11 und damit des Sitzes 12 in verschiedenen Höhenpositionen dient eine in die Antriebsvorrichtung integrierte Sperrklinke 17.3.

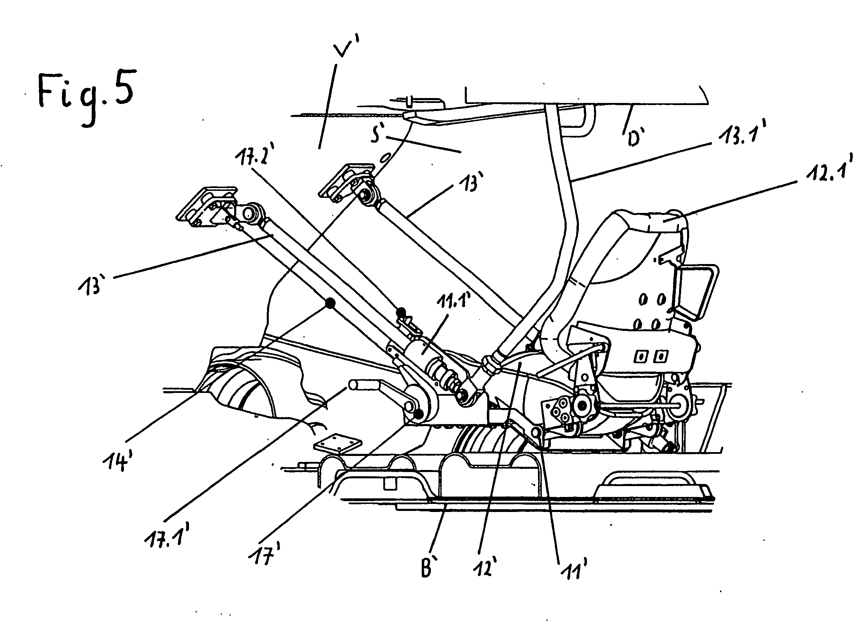

Bei einer in Fig. 5 dargestellten Variante der Ausführungsform nach Fig. 4 dient als Antriebsvorrichtung anstelle des Kettenantriebs ein Seilzugantrieb. Bei der Ausführungsform nach Fig. 5 sind die sich entsprechenden Teile der Fig. 4 mit den gleichen Bezugsziffern und einem Apostrophstrich bezeichnet. Das Grundgestell 11' trägt die Sitzplatte 12' mit Rückenlehne 12.1' und ist über Halterungen 11.1' an den Führungsrohren 13' geführt, deren obere Enden an der Vorderwand V' befestigt sind, während die unteren Enden über Verbindungsrohre 13.1' an der Dachplatte D' aufgehängt sind. Parallel zu den Führungsrohren 13' verläuft der Seilzug 14', der mittels eines Kurbelgetriebes 17' mit Freischaltkupplung zur Schnellabsenkung betätigt werden kann. Die Schnellabsenkung und Sitzarretierung erfolgt über ein Betätigungsorgan 17.2'.

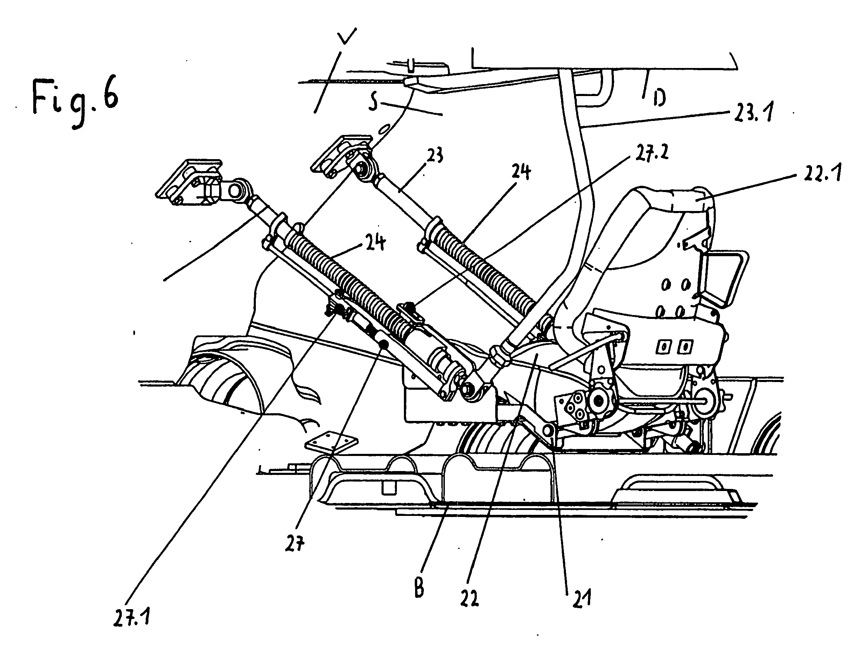

Fig. 6 zeigt ein Ausführungsbeispiel einer Sitzeinrichtung, bei der der Antrieb als Federantrieb ausgebildet ist. Das Grundgestell 21 trägt die Sitzplatte 22 mit Rückenlehne 22.1 und ist über Halterungen 21.1 an den Führungsrohren 23 geführt, die von Schraubenfedern 24 umfaßt werden. Diese Schraubenfedern 24 wirken als Ausgleichsfedern, die das Eigengewicht des Grundgestells 21 zusammen mit der Sitzplatte 22 im Gleichgewicht halten. Der eigentliche Federantrieb 27 verläuft parallel zu den Führungsrohren 23. Er besitzt eine in dem dargestellten Zylinder angeordnete Druckfeder, die bei Auslösung das Grundgestell 21 mit dem Sitz 22 nach oben drückt. Auch der Federantrieb 27 ist mit einer Vorrichtung 27.1 zur Sitzarretierung und zur Schnellabsenkung des Sitzes versehen. Die Betätigungsvorrichtung 27.2 für die Sitzarretierung und die Schnellabsenkung ist von der auf dem Sitz 22 befindlichen Person zu erreichen.

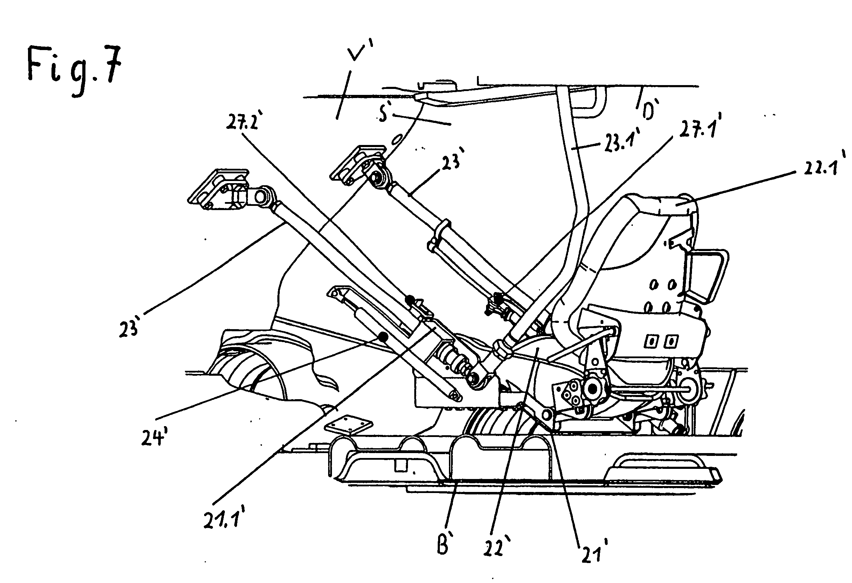

Eine Variante dieser Sitzeinrichtung mit Federantrieb zeigt Fig. 7. In Fig. 7 sind die gleichen Bezugsziffern wie in Fig. 6 verwendet und mit einem Apostrophstrich versehen.

Der Antrieb des Grundgestells 21', welches die Sitzplatte 22' mit Rückenlehne 22.1' trägt und das über eine Halterung 21.1' an den Führungsrohren 23' geführt ist, erfolgt hier durch einen Gasfederantrieb 24', der in nicht eigens dargestellter Weise ebenfalls eine Einrichtung zur Schnellabsenkung des Sitzes enthält. Weiterhin ist eine Vorrichtung 27.1' für die Sitzarretierung und eine Vorrichtung 27.2' für die Betätigung der Schnellabsenkung und der Sitzarretierung vorhanden. Die oberen Enden der Führungsrohre 23' sind an der Vorderwand V' befestigt, während die unteren Enden der Führungsrohre 23' über die Verbindungsrohre 23.1' an der Dachplatte D' aufgehängt sind.

## Patentansprüche

1. Sitzeinrichtung in einem Kampffahrzeug, welches eine auf einem Fahrgestell angeordnete Fahrzeugwanne aufweist, die in ihrer Dachplatte (D) mindestens eine mit einem Lukendeckel verschließbare Luke (L) aufweist, wobei die in der Fahrzeugwanne im Bereich unterhalb der Luke angeordnete Sitzeinrichtung ein Grundgestell (1) besitzt, auf dem eine Sitzplatte (2) angeordnet ist und an dem eine Rückenlehne schwenkbar befestigt ist und das Grundgestell (1) an der Vorder- oder Seitenwand (V, S) und/oder Dachplatte (D) der Fahrzeugwanne derart aufgehängt ist, dass ein vorgegebener Abstand zum Boden der Fahrzeugwanne nicht unterschritten wird **dadurch gekennzeichnet, dass** bei einem minengeschützten Kampffahrzeug das Grundgestell (1) mittels einer Rohrkonstruktion (3, 3.1) aufgehängt ist, die mindestens zwei zueinander parallel und schräg aufwärts zur Bodenebene der Fahrzeugwanne verlaufende Führungsrohre (3) aufweist, deren obere Enden im oberen Bereich der Vorder- oder Seitenwand (V, S) der Fahrzeugwanne befestigt und deren untere Enden über Verbindungsrohre (3.1) an der Dachplatte (D) der Fahrzeugwanne aufgehängt sind, wobei das Grundgestell (1) über Halterungen (1.1) verschiebbar auf den Führungsrohren (3) angeordnet ist und eine Antriebsvorrichtung (4) zur Bewegung des Grundgestells (1) auf- und abwärts in Richtung der Führungsrohre (3) vorgesehen ist.

2. Sitzeinrichtung nach Anspruch 1, **dadurch gekennzeichnet, dass** das Grundgestell als verformungssteife, splitterschützende Blechkonstruktion mit einer Bodenwand (1.2) und zwei geschlossenen Seitenwänden (1.3) ausgebildet ist.

3. Sitzeinrichtung nach Anspruch 2, **dadurch gekennzeichnet, dass** die Anordnung der Führungsrohre (3) derart ist, dass Grundgestell (1) und Sitzplatte (2) in einer vorgegebenen angehobenen Stellung direkt unterhalb der Lukenöffnung (L) angeordnet sind.

4. Sitzeinrichtung nach einem der Ansprüche 1 bis 3, **dadurch gekennzeichnet, dass** die Antriebsvorrichtung zur Bewegung des Grundgestells (1) als Spindeltrieb (4) mit elektrisch angetriebener Gewindespindel ausgebildet ist.

5. Sitzeinrichtung nach einem der Ansprüche 1 bis 3, **dadurch gekennzeichnet, dass** die Antriebsvorrichtung zur Bewegung des Grundgestells (1) als Seilzug- (14') oder Kettenantrieb (14) ausgebildet ist.

6. Sitzeinrichtung nach einem der Ansprüche 1 bis 3, **dadurch gekennzeichnet, dass** die Antriebsvorrichtung zur Bewegung des Grundgestells vorspannbare, arretierbare und entarretierbare Druck- oder Zugfedern (24, 27) aufweist.

7. Sitzeinrichtung nach einem der Ansprüche 1 bis 3, **dadurch gekennzeichnet, dass** die Antriebsvorrichtung zur Bewegung des Grundgestells mindestens eine Gasfeder (24') aufweist.

8. Sitzeinrichtung nach einem der Ansprüche 1 bis 7, **dadurch gekennzeichnet, dass** die Antriebsvorrichtung zur Bewegung des Grundgestells (1, 11, 21) eine Einrichtung (7, 17, 27.1) zur Schnellabsenkung aufweist.

## Claims

1. A seat arrangement in a combat vehicle which exhibits a vehicle hull arranged on a chassis, said vehicle hull exhibiting in its roof plate (D) at least one hatch (L) capable of being sealed by a hatch cover, the seat arrangement arranged in the vehicle hull in the region below the hatch having a basic frame (1) on which a seat plate (2) is arranged and to which a back-rest is fastened in tiltable manner, and the basic frame (1) being suspended from the front wall or side wall (V, S) and/or roof plate (D) of the vehicle hull in such a manner that a predetermined distance from the base of the vehicle hull is not fallen short of, **characterised in that** the basic frame (1) in a mine-protected combat vehicle is suspended by means of a tubular structure (3, 3.1) which exhibits at least two guide tubes (3) extending parallel to one another and obliquely upwards relative to the plane of the base of the vehicle hull, the upper ends of said guide tubes being fastened in the upper region of the front wall or side wall (V, S) of the vehicle hull, and the lower ends of said guide tubes being suspended from the roof plate (D) of the vehicle hull via connecting tubes (3.1), the basic frame (1) being arranged in displaceable manner on the guide tubes (3) via mounting brackets (1.1), and a drive mechanism (4) being provided for the purpose of moving the basic frame (1) up and down in the direction of the guide tubes (3).

2. Seat arrangement according to Claim 1, **characterised in that** the basic frame takes the form of a deformation-resistant, splinter-proof sheet-metal structure with a bottom wall (1.2) and two closed side walls (1.3).

3. Seat arrangement according to Claim 2, **characterised in that** the arrangement of the guide tubes (3) is such that the basic frame (1) and the seat plate (2) are arranged in a predetermined raised position directly below the hatch opening (L).

4. Seat arrangement according to one of Claims 1 to 3, **characterised in that** the drive mechanism for moving the basic frame (1) takes the form of a spindle drive (4) with an electrically driven threaded spindle.

5. Seat arrangement according to one of Claims 1 to 3, **characterised in that** the drive mechanism for moving the basic frame (1) takes the form of a cable drive (14') or chain drive (14).

6. Seat arrangement according to one of Claims 1 to 3, **characterised in that** the drive mechanism for moving the basic frame exhibits compression springs or tension springs (24, 27) that are capable of being prestressed, locked and unlocked.

7. Seat arrangement according to one of Claims 1 to 3, **characterised in that** the drive mechanism for moving the basic frame exhibits at least one pneumatic spring (24').

8. Seat arrangement according to one of Claims 1 to 7, **characterised in that** the drive mechanism for moving the basic frame (1, 11, 21) exhibits a device (7, 17, 27.1) for rapid lowering.

## Revendications

1. Système de siège dans un véhicule de combat comportant une caisse qui est agencée sur un châssis et qui comporte dans sa plaque de toit (D) au moins une écoutille (L) pouvant être fermée par un panneau d'écoutille, le système de siège agencé dans la caisse du véhicule dans la zone située en dessous de l'écoutille comportant un châssis de base (1), sur lequel est agencée une plaque d'assise (2) et sur lequel est fixé un dossier de siège apte à pivoter et le châssis de base (1) étant suspendu à la paroi avant ou latérale (V, S) de la caisse du véhicule et/ou à la plaque de toit (D) de cette dernière, de telle sorte que la distance par rapport au sol n'est pas inférieure à une distance prédéfinie, **caractérisé en ce que**, dans un véhicule de combat qui est protégé contre les mines, le châssis de base (1) est suspendu au moyen d'une structure tubulaire (3, 3.1), qui comporte au moins deux tubes de guidage (3) parallèles l'un à l'autre, qui s'étendent vers le haut en biais par rapport au plan du fond de la caisse du véhicule et dont les extrémités supérieures sont fixées dans la zone supérieure des parois avant et latérales (V, S) de la caisse du véhicule et dont les extrémités inférieures sont suspendues à la plaque de toit (D) de la caisse du véhicule par l'intermédiaire de tubes de liaison (3.1), le châssis de base (1) étant mobile sur les tubes de guidage (3) par l'intermédiaire de fixations (1.1) et un dispositif d'entraînement (4) étant prévu pour le déplacement du châssis de base (1) vers le haut et le bas dans le sens des tubes de guidage (3).

2. Système de siège selon la revendication 1, **caractérisé en ce que** le châssis de base est réalisé sous la forme d'une structure en tôle résistant à la déformation, protégeant contre les éclats, comportant une plaque de fond (1.2) et deux plaques latérales (1.3) fermées.

3. Système de siège selon la revendication 2, **caractérisé en ce que** les tubes de guidage (3) sont agencés de telle sorte que, dans une position haute prédéfinie, le châssis de base (1) et la plaque d'assise (2) sont disposés directement en dessous de l'ouverture de l'écoutille (L).

4. Système de siège selon l'une quelconque des revendications 1 à 3, **caractérisé en ce que** le dispositif d'entraînement destiné au déplacement du châssis de base (1) est réalisé sous forme de commande à entraînement par vis (4) comportant une broche filetée actionnée électriquement.

5. Système de siège selon l'une quelconque des revendications 1 à 3, **caractérisé en ce que** le dispositif d'entraînement destiné au déplacement du châssis de base (1) est réalisé sous forme de commande par câble (14') ou de commande par chaîne (14).

6. Système de siège selon l'une quelconque des revendications 1 à 3, **caractérisé en ce que** le dispositif d'entraînement destiné au déplacement du châssis de base comporte des ressorts de pression et de traction (24, 27) aptes à être précontraints, bloqués et débloqués.

7. Système de siège selon l'une quelconque des revendications 1 à 3, **caractérisé en ce que** le dispositif d'entraînement destiné au déplacement du châssis de base comporte au moins une suspension à gaz (24').

8. Système de siège selon l'une quelconque des revendications 1 à 7, **caractérisé en ce que** le dispositif d'entraînement destiné au déplacement du châssis de base (1, 11, 21) comporte un dispositif (7, 17, 27.1) destiné à l'abaissement rapide.
